(19) Europäisches Patentamt
European Patent Office
Office européen des brevets

(11) **EP 3 934 302 A1**

(12) **EUROPEAN PATENT APPLICATION**
published in accordance with Art. 153(4) EPC

(43) Date of publication:
**05.01.2022 Bulletin 2022/01**

(51) Int Cl.:
***H04W 16/14*** *(2009.01)*   ***H04W 72/04*** *(2009.01)*
***H04L 27/26*** *(2006.01)*

(21) Application number: **20762056.8**

(22) Date of filing: **21.02.2020**

(86) International application number:
**PCT/JP2020/007171**

(87) International publication number:
**WO 2020/175388 (03.09.2020 Gazette 2020/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.02.2019 JP 2019050451**

(71) Applicant: **NTT DOCOMO, INC.**
**Chiyoda-Ku**
**Tokyo 100-6150 (JP)**

(72) Inventor: **HARADA, Hiroki**
**Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL AND WIRELESS COMMUNICATION METHOD**

(57)    Appropriate communication is performed in an unlicensed band. A terminal according to one aspect of the present disclosure includes: a receiving section that receives one or a plurality of synchronization signal blocks by using a candidate position configured to a given slot; and a control section that performs control to receive the synchronization signal block at at least a specific candidate position irrespectively of a number of synchronization signal blocks to be transmitted in the given slot.

FIG. 8A

FIG. 8B

EP 3 934 302 A1

**Description**

Technical Field

The present disclosure relates to a terminal and a radio communication method of a next-generation mobile communication system.

Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (Third Generation Partnership Project (3GPP) Releases (Rel.) 8 and 9), LTE-Advanced (3GPP Rel. 10 to 14) has been specified.

LTE successor systems (also referred to as, for example, the 5th generation mobile communication system (5G), 5G+ (plus), New Radio (NR) or 3GPP Rel. 15 or subsequent releases) are also studied.

Legacy LTE systems (e.g., Rel. 8 to 12) have been specified assuming that exclusive operations are performed in frequency bands (also referred to as, for example, licensed bands, licensed carriers or licensed Component Carriers (licensed CCs)) licensed to telecommunications carriers (operators). For example, 800 MHz, 1.7 GHz and 2 GHz are used as the licensed CCs.

Furthermore, to expand a frequency band, the legacy LTE system (e.g., Rel. 13) supports use of a different frequency band (also referred to as an unlicensed band, an unlicensed carrier or an unlicensed CC) from the above licensed bands. A 2.4 GHz band and a 5 GHz band at which, for example, Wi-Fi (registered trademark) and Bluetooth (registered trademark) can be used are assumed as the unlicensed bands.

Rel. 13 supports Carrier Aggregation (CA) that aggregates a carrier (CC) of a licensed band and a carrier (CC) of an unlicensed band. Thus, communication that is performed by using an unlicensed band together with a licensed band will be referred to as License-Assisted Access (LAA).

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

Summary of Invention

Technical Problem

In the future radio communication systems (e.g., 5G, 5G+, NR and Rel. 15 and subsequent releases), before transmitting data in an unlicensed band, a transmission apparatus (e.g., a base station on Downlink (DL) and a user terminal on Uplink (UL)) performs listening for ascertaining whether or not another apparatus (e.g., a base station, a user terminal or a Wi-Fi apparatus) performs transmission.

It is conceived that these radio communication systems comply with a regulation or a requirement of an unlicensed band to coexist with other systems in the unlicensed band.

However, unless an operation in the unlicensed band is specifically determined, there is a risk that, for example, an operation in a specific communication situation does not conform to the regulation or radio resource use efficiency lowers, that is, it is not possible to perform appropriate communication in the unlicensed band.

It is therefore one of objects of the present disclosure to provide a terminal and a radio communication method that perform appropriate communication in an unlicensed band.

Solution to Problem

A terminal according to one aspect of the present disclosure includes: a receiving section that receives one or a plurality of synchronization signal blocks by using a candidate position configured to a given slot; and a control section that performs control to receive the synchronization signal block at at least a specific candidate position irrespectively of a number of synchronization signal blocks to be transmitted in the given slot.

Advantageous Effects of Invention

According to one aspect of the present disclosure, it is possible to perform appropriate communication in an unlicensed band.

Brief Description of Drawings

Figs. 1A to 1C are diagrams illustrating one example of multiplexing patterns.
Fig. 2 is a diagram illustrating one example of a search space configuration table for an FR 1 and a multiplexing pattern 1.
Figs. 3A and 3B are diagrams illustrating one example of a search space configuration for the FR 1 and the multiplexing pattern 1.
Figs. 4A and 4B are diagrams illustrating another example of the search space configuration for the FR 1 and the multiplexing pattern 1.
Figs. 5A to 5C are diagrams illustrating one example of SSB mapping patterns.
Figs. 6A and 6B are diagrams illustrating one example of RMSI PDSCH mapping.
Figs. 7A and 7B are diagrams illustrating one example of allocation of PDSCHs based on the number of SSBs to be transmitted in a slot.
Figs. 8A and 8B are diagrams illustrating one example of a configuration of SSB candidate positions according to a first aspect.
Fig. 9 is a diagram illustrating one example of a schematic configuration of a radio communication system according to one embodiment.
Fig. 10 is a diagram illustrating one example of a configuration of a base station according to the one embodiment.
Fig. 11 is a diagram illustrating one example of a configuration of a user terminal according to the one embodiment.
Fig. 12 is a diagram illustrating one example of hardware configurations of the base station and the user terminal according to the one embodiment.

Description of Embodiments

<Unlicensed Band>
A plurality of systems such as a Wi-Fi system and a system (LAA system) that supports LAA are assumed to coexist in unlicensed bands (e.g., a 2.4 GHz band and a 5 GHz band). Therefore, it is supposed that it is necessary to avoid collision of transmission and/or control an interference between a plurality of these systems.
For example, the Wi-Fi system that uses the unlicensed band adopts Carrier Sense Multiple Access (CSMA)/Collision Avoidance (CA) for a purpose of collision avoidance and/or interference control. According to CSMA/CA, a given time Distributed access Inter Frame Space (DIFS) is provided before transmission, and a transmission apparatus ascertains (carrier-senses) that there is not another transmission signal, and then transmits data. Furthermore, after transmitting the data, the transmission apparatus waits for ACKnowledgement (ACK) from a reception apparatus. When the transmission apparatus cannot receive the ACK within the given time, the transmission apparatus decides that collision has occurred, and retransmits the data.
According to LAA of a legacy LTE system (e.g., Rel. 13), before transmitting data in an unlicensed band, a transmission apparatus of the data performs listening (also referred to as, for example, Listen Before Talk (LBT), Clear Channel Assessment (CCA), carrier sensing, channel sensing, sensing or a channel access procedure) for ascertaining whether or not another apparatus (e.g., a base station, a user terminal or a Wi-Fi apparatus) performs transmission.
The transmission apparatus may be, for example, a base station (e.g., gNB: gNodeB) on Downlink (DL), and a user terminal (e.g., User Equipment (UE)) on Uplink (UL). Furthermore, a reception apparatus that receives data from the transmission apparatus may be, for example, the user terminal on DL, and the base station on UL.
According to LAA of the legacy LTE system, the transmission apparatus starts data transmission a given duration after (immediately after or a backoff duration after) detecting by LBT that another apparatus does not perform transmission (idle state).
Following four categories are specified as a channel access method according to LTE LAA.

- Category 1: A node performs transmission without performing LBT.
- Category 2: A node performs carrier-sensing at a fixed sensing time before transmission, and performs transmission when a channel is empty.
- Category 3: A node generates a value (random backoff) at random from a given range before transmission, repeats carrier-sensing at a fixed sensing slot time, and performs transmission when the node can ascertain that a channel is empty over a slot of the value.

- Category 4: A node generates a value (random backoff) at random from a given range before transmission, repeats carrier-sensing at a fixed sensing slot time, and performs transmission when the node can ascertain that a channel is empty over a slot of the value. The node changes a range of a random backoff value (contention window size) according to a communication failure situation due to collision against communication of another system.

It is studied as the LBT regulation to perform LBT matching the duration of a gap (such as a non-transmission duration or a duration in which received power is a given threshold or less) between two transmissions.

An NR system that uses an unlicensed band may be referred to as, for example, an NR-Unlicensed (U) system or an NR LAA system. There is a probability that Dual Connectivity (DC) of a licensed band and an unlicensed band and Stand-Alone (SA) of the unlicensed band are also adopted by NR-U.

According to NR-U, a base station (e.g., gNB) or a UE acquires a Transmission Opportunity (TxOP) when an LBT result indicates idle, and performs transmission. The base station or the UE does not perform transmission when the LBT result indicates busy (LBT-busy). A time of the transmission opportunity is referred to as a Channel Occupancy Time (COT).

It is studied that NR-U uses a signal including at least a Synchronization Signal (SS)/Physical Broadcast CHannel (PBCH) Block (SS Block (SSB)). Followings are studied for an unlicensed band operation that uses this signal.

- There is no gap within a time range in which the signal is transmitted in at least one beam
- An occupancy bandwidth is satisfied
- A channel occupancy time of the signal is minimized
- Characteristics that facilitate a quick channel access

Furthermore, a signal including a Channel State Information (CSI)-Reference Signal (RS), an SSB burst set (SSB set), a COntrol REsource SET (CORESET) associated with an SSB and a PDSCH in one contiguous burst signal is studied. This signal may be also referred to as a Discovery Reference Signal (such as a DRS or an NR-U DRS).

A CORESET associated with an SSB may be also referred to as, for example, a Remaining Minimum System Information (RMSI)-CORESET or a CORESET-zero (CORESET 0). The RMSI may be also referred to as a System Information Block 1 (SIB 1). A PDSCH associated with an SSB may be a PDSCH (RMSI PDSCH) that carries an RMSI, or a PDSCH that is scheduled by using a PDCCH (DCI including a CRC scrambled by a System Information (SI)-Radio Network Temporary Identifier (RNTI)) in the RMSI-CORESET.

SSBs having different SSB indices may be transmitted by using different beams (base station transmission beams). An SSB, and an RMSI PDCCH and an RMSI PDSCH associated with this SSB may be transmitted by using the same beam.

To coexist with other systems or other operators, a node (e.g., the base station or the UE) according to NR-U ascertains by LBT that a channel is empty (idle), and then starts transmission.

After succeeding in LBT, the node may continue transmission for a fixed duration after starting the transmission. In this regard, when the transmission is interrupted for a given gap duration or more in the middle, there is a probability that another system is using a channel, and therefore it is necessary to perform LBT again before next transmission. A transmission continuable duration depends on an LBT category or a priority class of LBT to be used. The priority class may be a random backoff contention window size. When an LBT duration is shorter (the priority class is higher), a transmission continuable time is shorter.

The node needs to perform transmission in a wide band according to a transmission bandwidth regulation of the unlicensed band. For example, transmission bandwidth regulations in Europe are 80% or more of system bandwidths. There is a probability that narrow band transmission causes collision without being detected by another system or another operator that performs LBT in the wide band.

Preferably, the node performs transmission in as short a time as possible. When each of a plurality of coexisting systems reduces a channel occupancy time, a plurality of systems can efficiently share resources.

Preferably, the base station according to NR-U transmits an SSB of a different beam (a beam index or an SSB index), and an RMSI PDCCH (a PDCCH for scheduling the RMSI PDSCH) and an RMSI PDSCH associated with the SSB in as short a time as possible by using as wide a band as possible. Consequently, the base station can apply a higher priority class (an LBT category of a shorter LBT duration) to SSB/RMSI (DRS) transmission, so that it is possible to expect that LBT succeeds at a higher probability. The base station can easily meet the transmission bandwidth regulation by performing transmission in the wide band. Furthermore, the base station can avoid interruption of transmission by performing transmission in a short time.

It is studied to make a bandwidth (UE channel bandwidth) of an initial Downlink (DL) Bandwidth Part (BWP) for NR-U 20 MHz. This is because a channel bandwidth of Wi-Fi that is a coexisting system is 20 MHz. In this case, the SSB, the RMSI PDCCH and the RMSI PDSCH need to be included in a 20 MHz bandwidth.

An NR-U DRS includes no gap in a transmission duration of at least one beam, so that it is possible to prevent the other systems from interrupting during the transmission duration.

The NR-U DRS may be periodically transmitted irrespectively of whether there are UEs in active states or there are UEs in idle states. Consequently, the base station can periodically transmit signals that are necessary for the channel access procedure by using simple LBT, and the UE can quickly access an NR-U cell.

To limit the number of times of necessary channel access and realize a short channel occupancy time, the NR-U DRS jams signals in a short time. The NR-U DRS may support NR-U of Stand Alone (SA).

<Multiplexing Pattern>

Rel. 15 NR specifies multiplexing patterns 1 to 3 of an SSB and an RMSI.

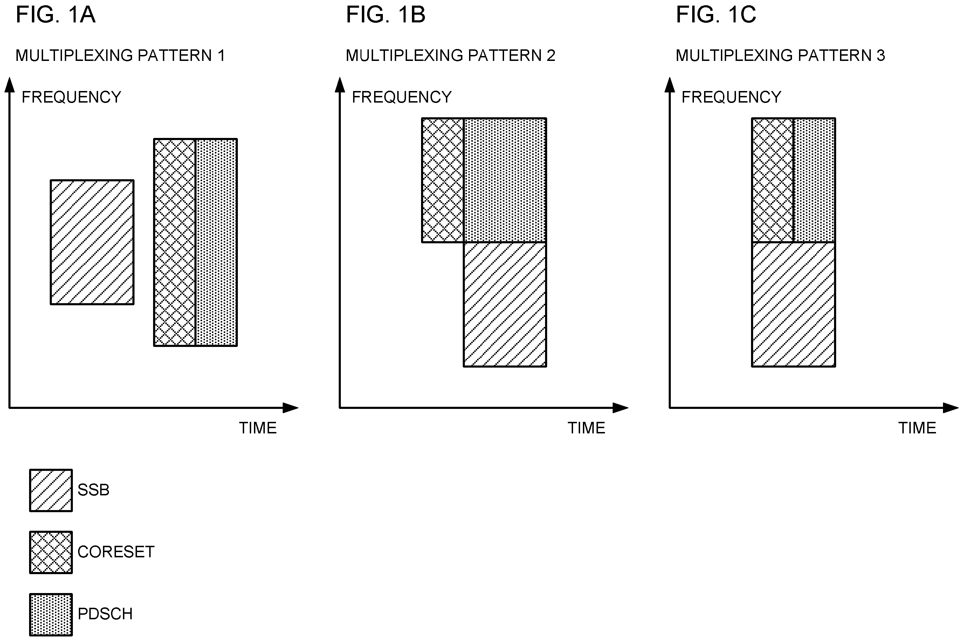

Multiplexing pattern 1: An SSB and an RMSI PDCCH CORESET (a CORESET including an RMSI PDCCH or a CORESET #0) are subjected to Time Division Multiplex (TDM) (Fig. 1A). In other words, the SSB and the CORESET are transmitted at different times, and a band of the CORESET includes a band of the SSB. The RMSI PDSCH may be subjected to TDM together with the RMSI PDCCH CORESET.

When the SSB and the CORESET cannot be subjected to Frequency Division Multiplex (FDM) in a band of a narrow channel bandwidth, it is effective to perform TDM on the SSB and the CORESET. When it is possible to transmit a plurality of beams at the same frequency and at the same time by digital beam forming in a low frequency range (the Frequency Range (FR) 1 and 6 GHz or less), it is not necessary to perform FDM using the same beam.

Multiplexing pattern 2: An SSB and an RMSI PDCCH CORESET are subjected to TDM and FDM (Fig. 1B).

When an SSB SubCarrier Spacing (the SCS of the SSB) is different from an RMSI SCS (the SCS of the RMSI), and particularly when the SSB SCS is wider than the RMSI SCS, an SSB time duration (symbol length) is short, and therefore there is a case where both of the RMSI PDCCH and the RMSI PDSCH cannot be subjected to FDM together with the SSB. In this case, the SSB and the RMSI PDCCH CORESET can be multiplexed in different time resources and different frequency resources.

When there is a restriction that analog beam forming is used, the base station can transmit only one beam. By performing FDM on the RMSI PDSCH together with the SSB, the base station can transmit one beam in a short time, and suppress a beam sweeping overhead.

Multiplexing pattern 3: An SSB and an RMSI PDCCH CORESET are subjected to FDM (Fig. 1C).

The base station can transmit one beam in a short time by performing FDM on both of the RMSI PDCCH and an RMSI PDSCH together with the SSB. The base station can suppress a beam sweeping overhead by switching a beam per SSB.

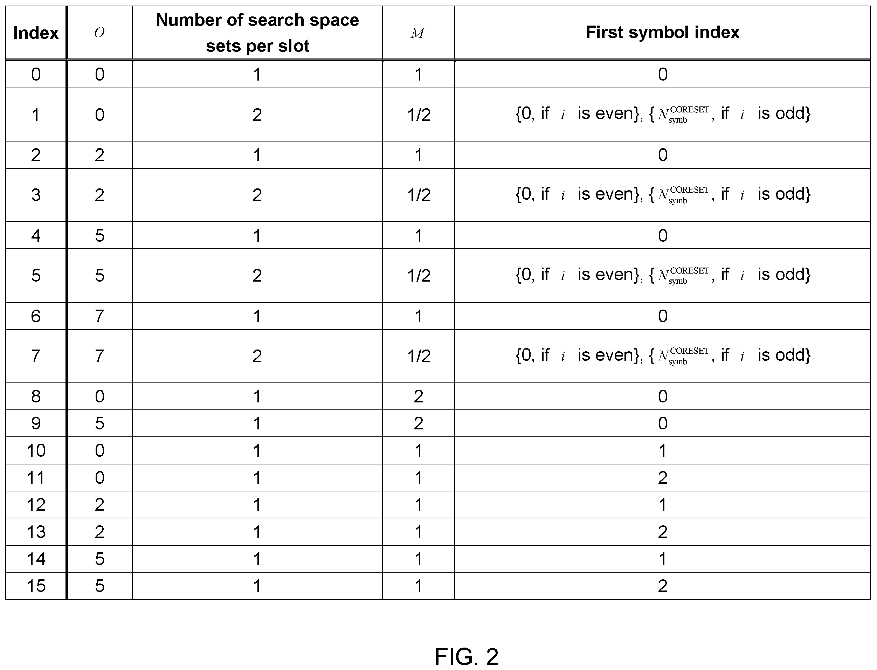

Rel. 15 NR specifies RMSI PDCCH (type 0-PDCCH common search space or search space #0) monitoring occasions for the multiplexing pattern 1 and the FR 1 as illustrated in a search space configuration table in Fig. 2. Only the multiplexing pattern 1 is specified for the FR 1. The UE uses a search space configuration (PDCCH monitoring occasion) associated with an index (search space configuration index) notified by a Master Information Block (an MIB or lower 4 bits of pdcch-ConfigSIB 1 in the MIB).

In a case of the multiplexing pattern 1, the UE monitors a PDCCH in the type 0-PDCCH common search space over two contiguous slots starting from a slot $n_0$. The UE determines for an SSB having an SSB index i a slot index $n_0$ positioned in a frame including a System Frame Number (SFN) SFNc according to a following equation.

[Mathematical 1]

$$n_0 = \left( O \cdot 2^\mu + \lfloor i \cdot M \rfloor \right) \bmod N_{\text{slot}}^{\text{frame},\mu}$$

$$\text{SFN}_C \bmod 2 = 0 \quad \text{if} \quad \left\lfloor \left( O \cdot 2^\mu + \lfloor i \cdot M \rfloor \right) / N_{\text{slot}}^{\text{frame},\mu} \right\rfloor \bmod 2 = 0$$

$$\text{SFN}_C \bmod 2 = 1 \quad \text{if} \quad \left\lfloor \left( O \cdot 2^\mu + \lfloor i \cdot M \rfloor \right) / N_{\text{slot}}^{\text{frame},\mu} \right\rfloor \bmod 2 = 1$$

In this search space configuration table, O is an offset [ms] from a slot including a beginning SSB (an SSB index is 0) to a slot including a corresponding RMSI PDCCH CORESET. M is a reciprocal of the number of search space sets per slot. $\mu \in \{0, 1, 2, 3\}$ is based on an SCS (RMSI SCS) used to receive a PDCCH in a CORESET. A beginning symbol index is an index of a beginning symbol of a CORESET in a slot nC. The number of SSBs per slot is 2.

By monitoring a search space set associated with one SSB over 2 slots, the UE can enhance flexibility of scheduling.

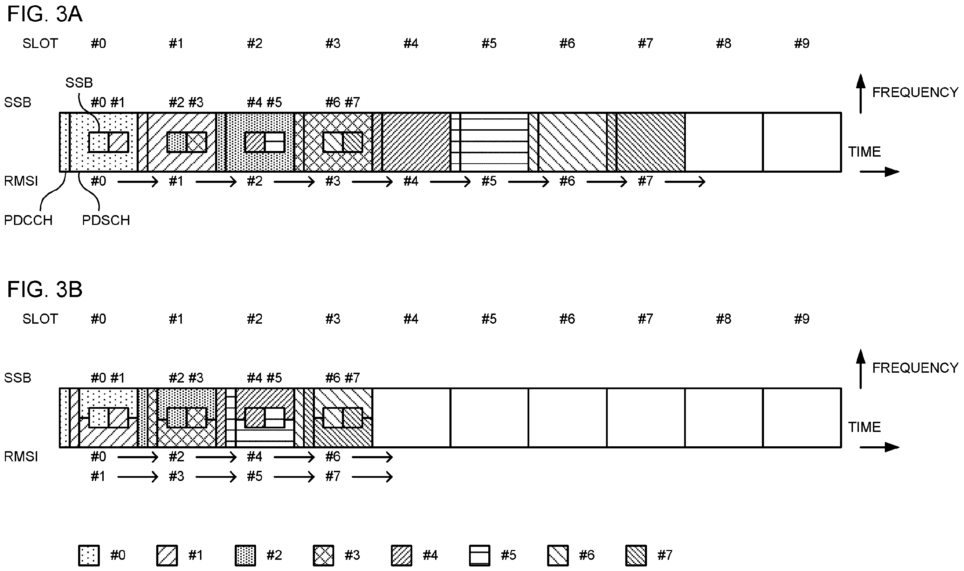

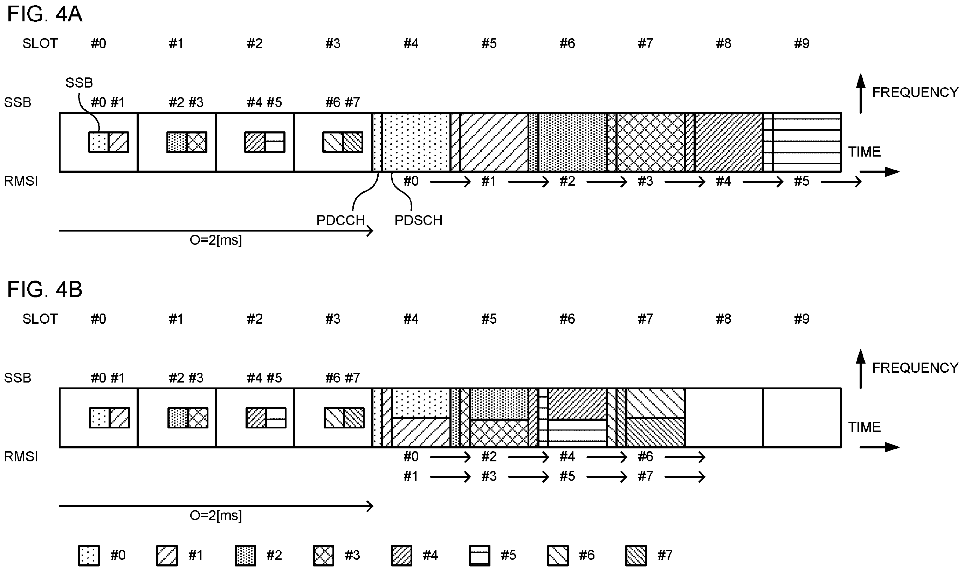

Figs. 3A, 3B, 4A and 4B illustrate cases where an RMSI SCS is 30 kHz, and a slot length is 0.5 ms.

In a case where the search space configuration index is 0 as illustrated in Fig. 3A, O is 0, the number of search space sets per slot is 1, M is 1, and the beginning symbol index is 0. The type 0-PDCCH common search space for an RMSI #0 associated with an SSB #0 in the slot #0 are over two contiguous slots #0 and #1, and a PDCCH and a PDSCH for the RMSI #0 are scheduled to the slot #0 of the slots #0 and #1. The number of search space sets per slot is 1, and therefore the type 0-PDCCH common search space for an RMSI #1 associated with an SSB #1 in the slot #0 are over next slots #1 and #2, and a PDCCH and a PDSCH for the RMSI #1 are scheduled to the slot #1 of the slots #1 and #2. Thus, a relative position of a slot for an RMSI with respect to a slot of an SSB changes according to an SSB index.

In a case where the search space configuration index is 1 as illustrated in Fig. 3B, the number of search space sets per slot is 2, and therefore two search spaces (PDCCHs) associated respectively with two SSBs can be arranged in 1 slot. A beginning symbol index of a search space is 0 in a case of an even-numbered SSB index, and an odd-numbered SSB index is a symbol obtained by offsetting the number of symbols of a CORESET (the number of CORESET symbols or $N_{symb}^{CORESET}$). In this example, two RMSI PDCCHs associated with two SSBs to be transmitted in 1 slot are transmitted at a beginning of the slot, and the corresponding two RMSI PDSCHs are subjected to FDM in the slot. That is, an SSB, and an RMSI PDCCH and an RMSI PDSCH associated with the SSB are transmitted in the same slot.

In a case where the search space configuration index is 2 as illustrated in Fig. 4A, there is an offset of 2 ms from a start slot of a beginning SSB to a start slot of the corresponding RMSI PDCCH. The rest is the same as the case where the search space configuration index is 0.

In a case where the search space configuration index is 3 as illustrated in Fig. 4B, there is an offset of 2 ms from a start slot of a beginning SSB to a start slot of the corresponding RMSI PDCCH. The rest is the same as the case where the search space configuration index is 1.

The multiplexing pattern 1 is recommended for multiplexing of an SSB and the CORESET #0 according to NR-U. According to the multiplexing pattern 1, the CORESET #0 and an SS/PBCH Block (SSB) are generated at different time instances, and a band of the CORESET #0 and a transmission band of the SS/PBCH block overlap (at least part of the band of the CORESET #0 overlaps the transmission band of the SS/PBCH block).

<Channel Access Procedure>

Category 2 LBT and category 4 LBT are studied as a channel access procedure for starting COT at the base station (gNB) that is a Load Based Equipment (LBE) device. Similar to LAA of LTE, category 2 LBT of 25 μs is used for a single DRS or a DRS multiplexed with non-unicast data (e.g., OSI, paging or RAR) when a DRS duty cycle is 1/20 or less, and a DRS total time duration is 1 ms or less (a DRS transmission periodicity is 20 ms or more, and the DRS total time duration is 1 ms or less). When the DRS duty cycle is larger than 1/20, or when the DRS total time duration is larger than 1 ms, category 4 LBT is used.

By mapping an SS/PBCH block, an RMSI PDCCH associated with the SS/PBCH block and an RMSI PDSCH associated with the SS/PBCH block as an NR-U DRS in a short time duration (within 1 ms), and transmitting the NR-U DRS, it is possible to apply category 2 LBT. Category 2 LBT that is CCA of 25 μs without random backoff can enhance a channel access success rate of the NR-U DRS compared to category 4 LBT with random backoff.

<SSB Transmission Candidate Position>

The type 0-PDCCH monitoring configuration (RMSI PDCCH monitoring occasion (time position)) for NR-U may satisfy at least following characteristics.

- A type 0-PDCCH and an SSB are subjected to TDM similar to the legacy multiplexing pattern 1
- Monitoring of the type 0-PDCCH of a second SSB in a slot in a gap between a first SSB and the second SSB in the slot is supported (this monitoring may be started from a symbol #6 or may be started from a symbol #7)
- A type 0-PDCCH candidate associated with one SSB is limited to a slot that carries the associated SSB

Following SSB mapping patterns A to F are studied as SSB transmission candidate positions (candidate SS/PBCH blocks) in a slot.

A: Case A according to Rel. 15 (SCS = 15 kHz)

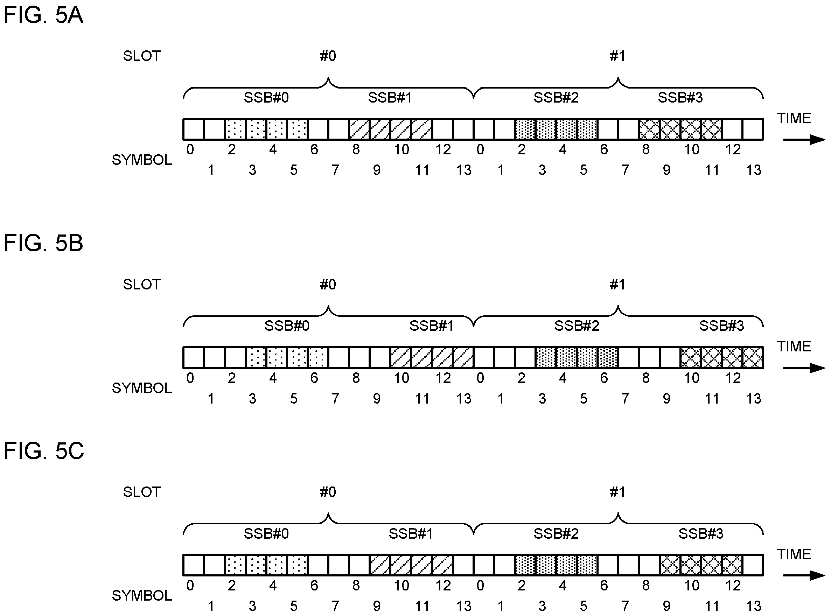

Two SSBs per slot are arranged respectively in symbols #2, #3, #4 and #5 and symbols #8, #9, #10 and #11 (Fig. 5A).

B: Case B according to Rel. 15 (SCS = 30 kHz)

Two SSBs per slot are arranged. The two SSBs in slots having even-numbered slot indices (#0, #2 and ...) are arranged respectively in the symbols #4, #5, #6 and #7 and the symbols #8, #9, #10 and #11. The two SSBs in slots having odd-numbered slot indices (#1, #3 and ...) are arranged respectively in the symbols #2, #3, #4 and #5 and the symbols #6, #7, #8 and #9.

C: Case C according to Rel. 15 (SCS = 30 kHz)

Two SSBs per slot are arranged respectively in the symbols #2, #3, #4 and #5 and the symbols #8, #9, #10 and #11 (Fig. 5A similar to the SSB mapping pattern A).

D: New case

Three SSBs per slot are arranged respectively in the symbols #2, #3, #4 and #5, the symbols #6, #7, #8 and #9 and the symbols #10, #11, #12 and #13 for Non-Stand-Alone (NSA).

E: New case

Two SSBs per slot pattern are arranged respectively in the symbols #3, #4, #5 and #6 and the symbols #10, #11, #12 and #13 for a Stand-Alone (SA)/Dual Connectivity (DC) mode (Fig. 5B).

F: New case

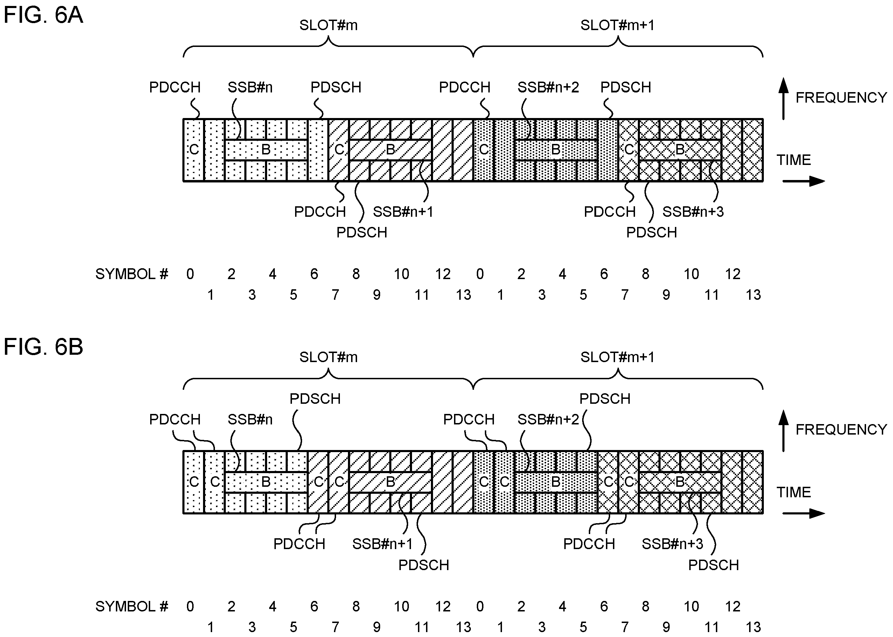

Two SSBs per slot pattern are arranged respectively in the symbols #2, #3, #4 and #5 and the symbols #9, #10, #11 and #12 for the SA/DC mode (Fig. 5C).
An SSB mapping pattern may be associated with at least one of an SCS and a band (an operating band or a frequency band). The UE may determine an SSB mapping pattern based on at least one of the SCS and the band.
Patterns that make it possible to arrange a PDCCH monitoring occasion between a first SSB and a second SSB in a slot among these patterns are the SSB mapping patterns A/C (Fig. 5A), the SSB mapping pattern E (Fig. 5B) and the SSB mapping pattern F (Fig. 5C).
It is thought that new SSB mapping patterns (e.g., SSB mapping patterns E and F) different from an SSB mapping pattern used for an NR target frequency (licensed band) are applied to an NR-U target frequency (unlicensed band), that is, an SSB mapping pattern applied to the NR-U target frequency is different from an SSB mapping pattern applied to the NR-U target frequency.
When detecting an SSB, the UE needs to switch an SSB mapping pattern between the NR target frequency and the NR-U target frequency to find a beginning of a frame based on an SSB timing. Furthermore, a scheduler rate-matches an SSB resource when an SSB and data are multiplexed. It is necessary to switch rate matching resources between the NR target frequency and the NR-U target frequency. Thus, when SSB mapping patterns are different between the NR target frequency and the NR-U target frequency, there is a risk that processing becomes complicated.
SSB mapping patterns (e.g., SSB mapping patterns A and C) that make it possible to arrange a PDCCH monitoring occasion (1 symbol or 2 symbols) between a first SSB and a second SSB in a slot among SSB mapping patterns for the NR target frequency are referred to as specific SSB mapping patterns below.
When the specific SSB mapping pattern is used and the number of symbols of the CORESET 0 is 1 as illustrated in Fig. 6A, it is possible to map on a symbol #0 an RMSI PDCCH (C in Fig. 6A) associated with the first SSB (#n, #n+2 and B in Fig. 6A), and map a corresponding RMSI PDSCH on the symbols #2 to #6. It is possible to map on the symbol #7 an RMSI PDCCH (C in Fig. 6A) associated with the second SSB (#n+1, #n+3 and B in Fig. 6A), and map a corresponding RMSI PDSCH on the symbols #8 to #13. That is, the number of symbols of the RMSI PDSCH associated with the first SSB is 6, and the number of symbols of the RMSI PDSCH associated with the second SSB is 6.
When the specific SSB mapping pattern is used and the number of symbols of the CORESET 0 is 2 as illustrated in Fig. 6B, it is possible to map on the symbols #0 and #1 an RMSI PDCCH (C in Fig. 6B) associated with the first SSB (#n, #n+2 and B in Fig. 6B), and map a corresponding RMSI PDSCH on the symbols #2 to #5. It is possible to map on the symbols #6 and #7 an RMSI PDCCH (C in Fig. 6B) associated with the second SSB (#n+1, #n+3 and B in Fig. 6B), and map a corresponding RMSI PDSCH on the symbols #8 to #13.
In this case, the number of symbols of the RMSI PDSCH associated with the first SSB is 4, the number of symbols of the RMSI PDSCH associated with the second SSB is 6, and the number of symbols of the RMSI PDSCH associated with the first SSB is smaller than the number of symbols of the RMSI PDSCH associated with the second SSB. That is, a capacity of the RMSI PDSCH associated with the first SSB lowers. Particularly when the number of symbols of the CORESET 0 is two, the number of resources that can be used for an RMSI PDSCH is small.

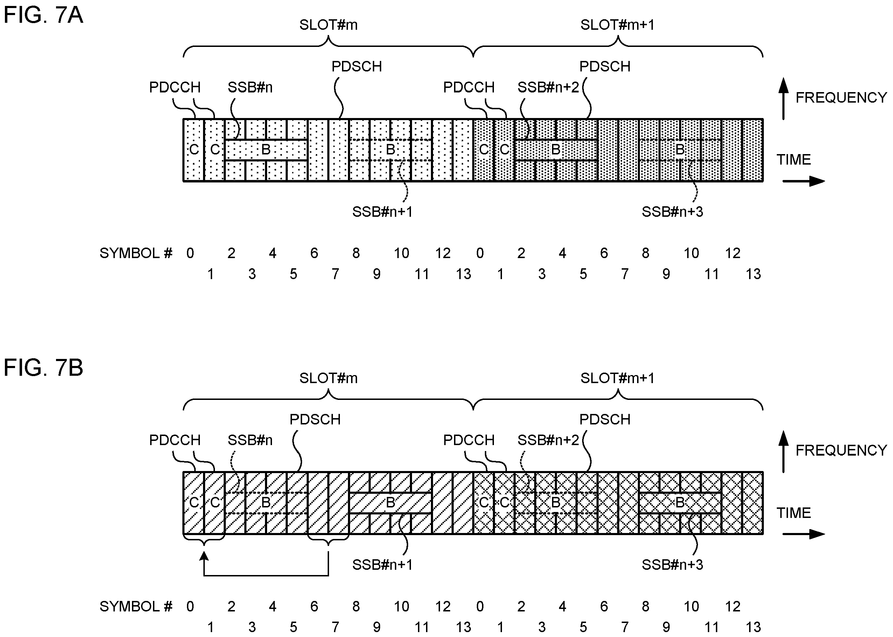

It is conceived to make the number of SSBs in a slot variable (i.e., to change and make it possible to control the number of SSBs) to increase the number of resources that can be used can be used for the RMSI PDSCH. For example, it is possible to make the number of SSBs in the slot one (see Fig. 7).

Fig. 7A illustrates a case where SSBs are transmitted by using candidate positions (the SSB #n and the SSB #n+1) configured to a first half of a slot, and an SSB is not transmitted by using candidate positions (the SSB #n+1 and the SSB #n+3) configured to a second half. In this case, a resource of an RMSI PDSCH associated with the SSB #n can be configured to a domain (e.g., at least one of time and frequency domains) including another SSB candidate position (SSB #n+1) by using a PDCCH (or DCI) associated with the SSB to be transmitted in the SSB #n in a slot #m.

Fig. 7B illustrates a case where SSBs are transmitted by using candidate positions (the SSB #n+1 and the SSB #n+3) configured to a second half of a slot, and

an SSB is not transmitted by using candidate positions (the SSB #n and the SSB #n+2) configured to a first half. In this case, a case is assumed where a resource of an RMSI PDSCH associated with the SSB #n+1 is configured to a domain including another SSB candidate position (SSB #n) by using a PDCCH (or DCI) associated with the SSB n+1 in the slot #m.

In this case, when the PDCCH associated with the SSB #n+1 is allocated to the symbol #6 or #7, it is difficult to map PDSCH resources on symbols before the PDCCH. Hence, it is conceived to allocate a PDCCH (or a PDCCH monitoring occasion) associated with the SSB #n+1 to a first half (e.g., symbol #0 or #1) of a slot as illustrated in Fig. 7B.

When a PDCCH monitoring occasion is changed to use only a second SSB candidate position in a slot as illustrated in Fig. 7B, the UE needs to change the PDCCH monitoring occasion based on the number of SSBs in the slot.

Alternatively, in this case, how the UE decides the number of SSBs in a slot (or the number of SSBs to be transmitted in the slot) matters.

Hence, the inventors of the present disclosure have conceived receiving synchronization signal blocks at at least specific candidate positions irrespective of the number of synchronization signal blocks to be transmitted in a given slot in a configuration where the number of SSBs to be transmitted in a slot is allowed to be changed (or is variably configured) as one aspect of the present disclosure.

An embodiment according to the present disclosure will be described in detail below with reference to the drawings. A radio communication method according to each embodiment may be each applied alone or may be applied in combination.

In the present disclosure, a frequency, a band, a spectrum, a carrier, a Component Carrier (CC) and a cell may be interchangeably read.

In the present disclosure, an NR-U target frequency, an unlicensed band, an unlicensed spectrum, an LAA SCell, an LAA cell, a Primary Cell (a PCell, a Primary Secondary Cell: PSCell and a Special Cell: SpCell), a Secondary Cell (SCell) and a first frequency that makes channel sensing before transmission necessary may be interchangeably read. In the present disclosure, listening, Listen Before Talk (LBT), Clear Channel Assessment (CCA), carrier sensing, sensing, channel sensing and a channel access procedure may be interchangeably read.

In the present disclosure, an NR target frequency, a licensed band, a licensed spectrum, a PCell, a PSCell, an SpCell, an SCell, a non-NR-U target frequency, Rel. 15, NR and a second frequency that does not make channel sensing before transmission necessary may be interchangeably read.

Different frame structures may be used for the NR-U target frequency and the NR target frequency.

A radio communication system (NR-U or LAA system) may comply with first radio communication standards (i.e., support the first radio communication standards) (e.g., NR and LTE).

Other systems (coexisting systems and coexisting apparatuses) and other radio communication apparatuses (coexisting apparatuses) that coexist with this radio communication system may comply with second radio communication standards (i.e., support the second radio communication standards) such as Wi-Fi, Bluetooth (registered trademark), WiGig (registered trademark), radio Local Area Network (LAN), IEEE802.11 and Low Power Wide Area (LPWA) different from the first radio communication standards. The coexisting systems may be systems that are interfered by the radio communication system, or may be systems that interfere with the radio communication system.

An SSB, an RMSI PDCCH, an RMSI PDSCH, a DRS and an NR-U DRS associated with one beam (SSB index) may be interchangeably read. An SSB, an SS/PBCH block, a beam and a base station transmission beam may be interchangeably read.

An RMSI PDCCH, DCI that includes a CRC scrambled by an SI-RNTI and has a system information indicator set to 0, a PDCCH for scheduling an RMSI PDSCH, a PDCCH associated with an SSB, an RMSI CORESET, a Type 0-PDCCH, the CORESET 0, a CORESET that has an index 0, a PDCCH and a CORESET may be interchangeably read.

An RMSI PDSCH, a PDSCH that is scheduled by DCI that includes a CRC scrambled by an SI-RNTI and has a system information indicator set to 0, system information, an SIB 1, a PDSCH that carries the SIB 1, a PDSCH associated with an SSB and a PDSCH may be interchangeably read.

For at least one of the SSB, the RMSI PDCCH and the RMSI PDSCH, a configuration of the NR target frequency may be read as a configuration of Rel. 15 NR.

(First Aspect)

According to the first aspect, control is performed to receive synchronization signal blocks at at least specific candidate positions irrespectively of the number of synchronization signal blocks to be transmitted in a given slot.

The following description will be described by citing a case where two SSB candidate positions (or SSB transmission candidate positions) are configured in a slot as an example. However, the number of SSB candidate positions that can be configured in the slot may be three or more. Furthermore, a case where the number of CORESETs (or PDCCH monitoring occasions) associated with SSBs are two will be cited as an example and described. However, the number of CORESETs is not limited to this, and may be one or three or more.

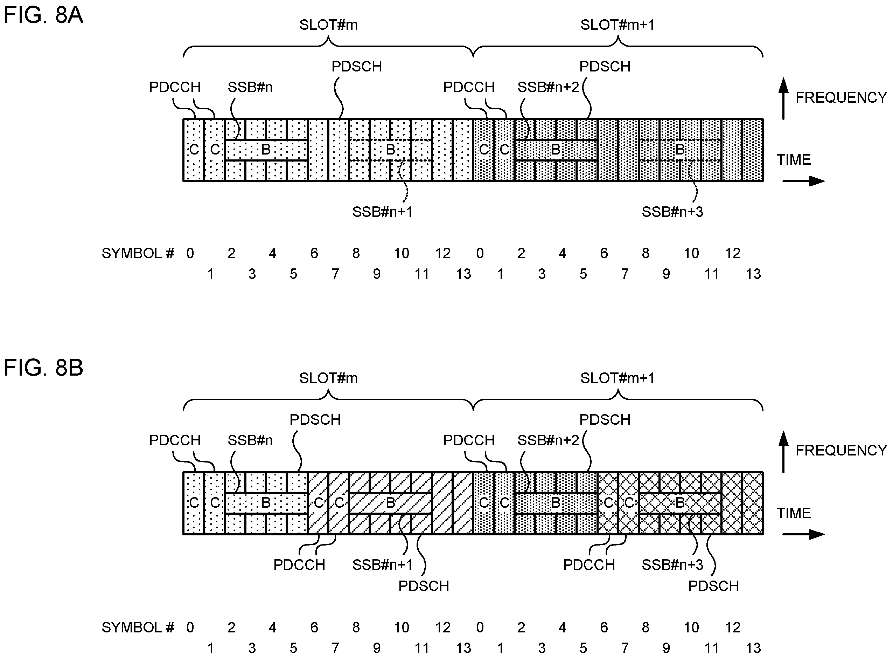

At least one of a UE and a base station performs control to use a specific SSB candidate position in a slot when the number of SSBs to be transmitted in the slot is 1. The specific SSB candidate position in the slot may be a head (e.g., first) SSB candidate position in a time direction (see Fig. 8A).

When the number of SSBs to be transmitted in a slot is 1 in Fig. 8A, the base station transmits an SSB by using an SSB candidate position (an SSB #n and an SSB #n+2) configured to a first half of the slot.

When the number of SSBs to be transmitted in the slot is 1, the UE may assume that the SSB is transmitted by using the SSB candidate position (the SSB #n and the SSB #n+2) configured to the first half of the slot. That is, when the SSB is transmitted in the slot, the UE performs control to receive the SSB by using the SSB candidate position configured to at least the first half of the slot irrespectively of the number of SSBs to be transmitted.

A resource of a PDSCH indicated (or scheduled) by a PDCCH associated with one SSB to be transmitted in the slot may be a range including another SSB candidate position. For example, a PDCCH associated with an SSB to be transmitted by using the SSB #n in a slot #m may indicate a domain including another SSB candidate position (SSB #n+1) as a resource of a PDSCH associated with the SSB.

Thus, there may be employed a configuration where, when SSBs the number of which is smaller (e.g., one) than a maximum number of SSB candidate positions configured in a slot are transmitted, a case (see Fig. 7B) where an RMSI PDSCH is transmitted in an entire slot by using a second SSB candidate position in the slot is not supported. A PDCCH monitoring occasion associated with a first SSB does not change both in a case where the number of SSBs to be transmitted in the slot is 1 and a case where the number of SSBs to be transmitted in the slot is 2, so that the UE can decide the PDCCH monitoring occasion even when the UE cannot grasp the number of SSBs to be transmitted in the slot.

The UE may decide at least one of whether or not another SSB is transmitted and whether or not rate-matching is applied to the PDSCH based on PDSCH resource allocation notified by a PDCCH associated with a given SSB.

When, for example, the PDSCH resource allocation notified by the PDCCH associated with the given SSB includes another SSB candidate positon, the UE may assume or decide that an SSB is not transmitted at the another SSB candidate position, and control reception. In this case, the UE may assume or decide that a PDSCH is mapped at another SSB candidate position, and control reception. Alternatively, the UE may perform control to not rate-match the PDSCH to be mapped at the another SSB candidate position.

A case is assumed where PDSCH resource allocation notified by a PDCCH associated with the SSB #n (or an SSB to be transmitted by using the SSB #n) in the slot #m includes the SSB #n+1 in Fig. 8A. In this case, the UE may assume or decide that the SSB is not transmitted in the SSB #n+1 and a PDSCH is mapped, and control reception. Furthermore, the UE may perform control to not rate-match the PDSCH in the SSB #n+1.

On the other hand, a case is assumed where PDSCH resource allocation notified by a PDCCH associated with the SSB #n (or an SSB to be transmitted by using the SSB #n) in the slot #m does not include the SSB #n+1. In this case, the UE may assume or decide that the SSB is transmitted in the SSB #n+1 and control reception (see Fig. 8B). Furthermore, the UE may perform control to rate-match the PDSCH in the SSB #n+1. Alternatively, the UE may assume that the PDSCH is not allocated in the SSB #n+1.

Consequently, the UE can implicitly grasp the number of SSBs to be transmitted in a slot based on RMSI PDSCH resource allocation without being notified of information related to the number of SSBs using, for example, a PBCH. As a result, the information related to the number of SSBs does not need to be included in the PBCH, so that it is possible to suppress an increase in the number of bits of the PBCH, and appropriately receive the RMSI PDSCH even when the number of SSBs to be transmitted in the slot is changed.

(Variation)

The above first aspect has described the case where the number of SSBs to be transmitted in a slot is not explicitly notified to the UE. However, the present disclosure is not limited to this. The number of SSBs in the slot may be notified from the base station to the UE.

For example, information related to the number of SSBs in a slot may be included in a PDCCH associated with SSBs to be transmitted by using a head SSB candidate position (e.g., an SSB #n in Fig. 8) in the slot, and notified to the UE.

Alternatively, the information related to the number of SSBs in a slot may be included in a PDSCH to be scheduled by a PDCCH associated with SSBs to be transmitted by using a head SSB candidate position (e.g., the SSB #n in Fig. 8) in the slot, and notified to the UE.

Consequently, the UE can appropriately grasp the number of SSBs in a slot, and flexibly configure PDSCH resource allocation.

The UE may decide to rate-match a PDSCH at each SSB candidate position based on the information related to the number of SSBs notified from the base station. When, for example, the notified number of SSBs is 1, control may be performed to rate-match a PDSCH at a given SSB candidate position and to not rate-match PDSCHs at other SSB candidate positions. Furthermore, when the notified number of SSBs is plural (e.g., 2), control may be performed to rate-match a PDSCH at each SSB candidate position in a slot. Alternatively, the UE may assume that PDSCHs are not allocated to SSB candidate positions.

(Radio Communication System)

The configuration of the radio communication system according to one embodiment of the present disclosure will be described below. This radio communication system uses one or a combination of the radio communication method according to each of the above embodiment of the present disclosure to perform communication.

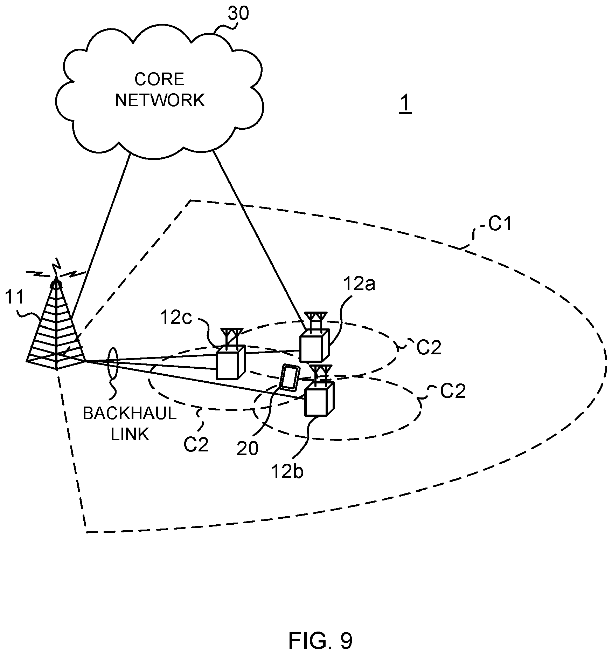

Fig. 9 is a diagram illustrating one example of a schematic configuration of the radio communication system according to the one embodiment. A radio communication system 1 may be a system that realizes communication by using Long Term Evolution (LTE) or the 5th generation mobile communication system New Radio (5G NR) specified by the Third Generation Partnership Project (3GPP).

Furthermore, the radio communication system 1 may support dual connectivity between a plurality of Radio Access Technologies (RATs) (Multi-RAT Dual Connectivity (MR-DC)). MR-DC may include dual connectivity (E-UTRA-NR Dual Connectivity (EN-DC)) of LTE (Evolved Universal Terrestrial Radio Access (E-UTRA)) and NR, and dual connectivity (NR-E-UTRA Dual Connectivity (NE-DC)) of NR and LTE.

According to EN-DC, a base station (eNB) of LTE (E-UTRA) is a Master Node (MN), and a base station (gNB) of NR is a Secondary Node (SN). According to NE-DC, a base station (gNB) of NR is an MN, and a base station (eNB) of LTE (E-UTRA) is an SN.

The radio communication system 1 may support dual connectivity between a plurality of base stations in an identical RAT (e.g., dual connectivity (NR-NR Dual Connectivity (NN-DC)) where both of the MN and the SN are base stations (gNBs) according to NR).

The radio communication system 1 may include a base station 11 that forms a macro cell C1 of a relatively wide coverage, and base stations 12 (12a to 12c) that are located in the macro cell C1 and form small cells C2 narrower than the macro cell C1. The user terminal 20 may be located in at least one cell. An arrangement and the numbers of respective cells and the user terminals 20 are not limited to the aspect illustrated in Fig. 9. The base stations 11 and 12 will be collectively referred to as a base station 10 below when not distinguished.

The user terminal 20 may connect with at least one of a plurality of base stations 10. The user terminal 20 may use at least one of Carrier Aggregation (CA) and Dual Connectivity (DC) that use a plurality of Component Carriers (CCs).

Each CC may be included in at least one of a first frequency range (Frequency Range 1 (FR 1)) and a second frequency range (Frequency Range 2 (FR 2)). The macro cell C1 may be included in the FR 1, and the small cell C2 may be included in the FR 2. For example, the FR 1 may be a frequency range equal to or less than 6 GHz (sub-6 GHz), and the FR 2 may be a frequency range higher than 24 GHz (above-24 GHz). In addition, the frequency ranges and definitions of the FR 1 and the FR 2 are not limited to these, and, for example, the FR 1 may correspond to a frequency range higher than the FR 2.

Furthermore, the user terminal 20 may perform communication by using at least one of Time Division Duplex (TDD) and Frequency Division Duplex (FDD) in each CC.

A plurality of base stations 10 may be connected by way of wired connection (e.g., optical fibers compliant with a Common Public Radio Interface (CPRI) or an X2 interface) or radio connection (e.g., NR communication). When, for example, NR communication is used as a backhaul between the base stations 11 and 12, the base station 11 corresponding to a higher station may be referred to as an Integrated Access Backhaul (IAB) donor, and the base station 12 corresponding to a relay station (relay) may be referred to as an IAB node.

The base station 10 may be connected with a core network 30 via the another base station 10 or directly. The core network 30 may include at least one of, for example, an Evolved Packet Core (EPC), a 5G Core Network (5GCN) and a Next Generation Core (NGC).

The user terminal 20 is a terminal that supports at least one of communication schemes such as LTE, LTE-A and 5G.

The radio communication system 1 may use an Orthogonal Frequency Division Multiplexing (OFDM)-based radio access scheme. For example, on at least one of Downlink (DL) and Uplink (UL), Cyclic Prefix OFDM (CP-OFDM), Discrete Fourier Transform Spread OFDM (DFT-s-OFDM), Orthogonal Frequency Division Multiple Access (OFDMA) and Single Carrier Frequency Division Multiple Access (SC-FDMA) may be used.

The radio access scheme may be referred to as a waveform. In addition, the radio communication system 1 may use another radio access scheme (e.g., another single carrier transmission scheme or another multicarrier transmission scheme) as the radio access scheme on UL and DL.

The radio communication system 1 may use a downlink shared channel (Physical Downlink Shared Channel (PDSCH)) shared by each user terminal 20, a broadcast channel (Physical Broadcast Channel (PBCH)) and a downlink control channel (Physical Downlink Control Channel (PDCCH)) as downlink channels.

Furthermore, the radio communication system 1 may use an uplink shared channel (Physical Uplink Shared Channel (PUSCH)) shared by each user terminal 20, an uplink control channel (Physical Uplink Control Channel (PUCCH)) and a random access channel (Physical Random Access Channel (PRACH)) as uplink channels.

User data, higher layer control information and a System Information Block (SIB) are conveyed on the PDSCH. The user data and the higher layer control information may be conveyed on the PUSCH. Furthermore, a Master Information Block (MIB) may be conveyed on the PBCH.

Lower layer control information may be conveyed on the PDCCH. The lower layer control information may include, for example, Downlink Control Information (DCI) including scheduling information of at least one of the PDSCH and the PUSCH.

In addition, DCI for scheduling the PDSCH may be referred to as, for example, a DL assignment or DL DCI, and DCI for scheduling the PUSCH may be referred to as, for example, a UL grant or UL DCI. In this regard, the PDSCH may be read as DL data, and the PUSCH may be read as UL data.

A COntrol REsource SET (CORESET) and a search space may be used to detect the PDCCH. The CORESET corresponds to a resource for searching DCI. The search space corresponds to a search domain and a search method of PDCCH candidates. One CORESET may be associated with one or a plurality of search spaces. The UE may monitor a CORESET associated with a certain search space based on a search space configuration.

One search space may be associated with a PDCCH candidate corresponding to one or a plurality of aggregation levels. One or a plurality of search spaces may be referred to as a search space set. In addition, a "search space", a "search space set", a "search space configuration", a "search space set configuration", a "CORESET" and a "CORESET configuration" in the present disclosure may be interchangeably read.

Uplink Control Information (UCI) including at least one of Channel State Information (CSI), transmission acknowledgement information (that may be referred to as, for example, Hybrid Automatic Repeat reQuest ACKnowledgement (HARQ-ACK) or ACK/NACK) and a Scheduling Request (SR) may be conveyed on the PUCCH. A random access preamble for establishing connection with a cell may be conveyed on the PRACH.

In addition, downlink and uplink in the present disclosure may be expressed without adding "link" thereto. Furthermore, various channels may be expressed without adding "physical" to heads of the various channels.

The radio communication system 1 may convey a Synchronization Signal (SS) and a Downlink Reference Signal (DL-RS). The radio communication system 1 may convey a Cell-specific Reference Signal (CRS), a Channel State Information Reference Signal (CSI-RS), a DeModulation Reference Signal (DMRS), a Positioning Reference Signal (PRS) and a Phase Tracking Reference Signal (PTRS) as DL-RSs.

The synchronization signal may be at least one of, for example, a Primary Synchronization Signal (PSS) and a Secondary Synchronization Signal (SSS). A signal block including the SS (the PSS or the SSS) and the PBCH (and the DMRS for the PBCH) may be referred to as, for example, an SS/PBCH block or an SS Block (SSB). In addition, the SS and the SSB may be also referred to as reference signals.

Furthermore, the radio communication system 1 may convey a Sounding Reference Signal (SRS) and a DeModulation Reference Signal (DMRS) as UpLink Reference Signals (UL-RSs). In this regard, the DMRS may be referred to as a user terminal-specific reference signal (UE-specific reference signal).

(Base Station)

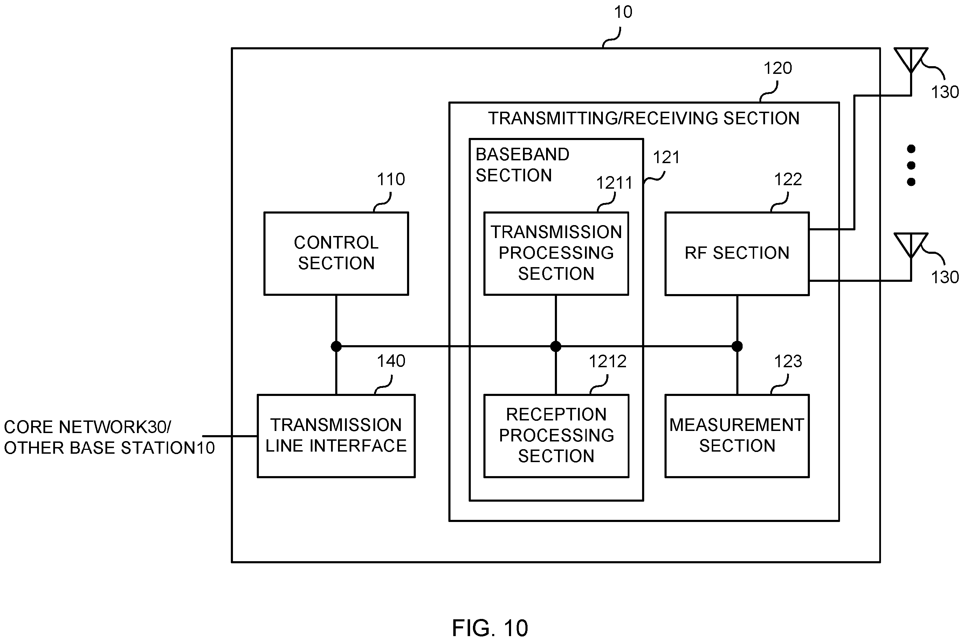

Fig. 10 is a diagram illustrating one example of a configuration of the base station according to the one embodiment. The base station 10 includes a control section 110, a transmitting/receiving section 120, transmission/reception antennas 130 and a transmission line interface 140. In addition, the base station 10 may include one or more of each of the control sections 110, the transmitting/receiving sections 120, the transmission/reception antennas 130 and the transmission line interfaces 140.

In addition, this example mainly illustrates function blocks of characteristic portions according to the present embodiment, and may assume that the base station 10 includes other function blocks, too, that are necessary for radio communication. Part of processing of each section described below may be omitted.

The control section 110 controls the entire base station 10. The control section 110 can be composed of a controller or a control circuit described based on the common knowledge in the technical field according to the present disclosure.

The control section 110 may control signal generation and scheduling (e.g., resource allocation or mapping). The control section 110 may control transmission/reception and measurement that use the transmitting/receiving section 120, the transmission/reception antennas 130 and the transmission line interface 140. The control section 110 may generate data, control information or a sequence to be transmitted as a signal, and forward the signal to the transmitting/receiving section 120. The control section 110 may perform call processing (such as configuration and release) of a communication channel, state management of the base station 10 and radio resource management.

The transmitting/receiving section 120 may include a baseband section 121, a Radio Frequency (RF) section 122 and a measurement section 123. The baseband section 121 may include a transmission processing section 1211 and a reception processing section 1212. The transmitting/receiving section 120 can be composed of a transmitter/receiver, an RF circuit, a baseband circuit, a filter, a phase shifter, a measurement circuit and a transmission/reception circuit described based on the common knowledge in the technical field according to the present disclosure.

The transmitting/receiving section 120 may be composed as an integrated transmitting/receiving section, or may be composed of a transmitting section and a receiving section. The transmitting section may be composed of the transmission processing section 1211 and the RF section 122. The receiving section may be composed of the reception processing section 1212, the RF section 122 and the measurement section 123.

The transmission/reception antenna 130 can be composed of an antenna such as an array antenna described based on the common knowledge in the technical field according to the present disclosure.

The transmitting/receiving section 120 may transmit the above-described downlink channel, synchronization signal and downlink reference signal. The transmitting/receiving section 120 may receive the above-described uplink channel and uplink reference signal.

The transmitting/receiving section 120 may form at least one of a transmission beam and a reception beam by using digital beam forming (e.g., precoding) or analog beam forming (e.g., phase rotation).

The transmitting/receiving section 120 (transmission processing section 1211) may perform Packet Data Convergence Protocol (PDCP) layer processing, Radio Link Control (RLC) layer processing (e.g., RLC retransmission control), and Medium Access Control (MAC) layer processing (e.g., HARQ retransmission control) on, for example, the data and the control information obtained from the control section 110, and generate a bit sequence to transmit.

The transmitting/receiving section 120 (transmission processing section 1211) may perform transmission processing such as channel coding (that may include error correction coding), modulation, mapping, filter processing, Discrete Fourier Transform (DFT) processing (when needed), Inverse Fast Fourier Transform (IFFT) processing, precoding and digital-analog conversion on the bit sequence to transmit, and output a baseband signal.

The transmitting/receiving section 120 (RF section 122) may modulate the baseband signal into a radio frequency range, perform filter processing and amplification on the signal, and transmit the signal of the radio frequency range via the transmission/reception antennas 130.

On the other hand, the transmitting/receiving section 120 (RF section 122) may perform amplification and filter processing on the signal of the radio frequency range received by the transmission/reception antennas 130, and demodulate the signal into a baseband signal.

The transmitting/receiving section 120 (reception processing section 1212) may apply reception processing such as analog-digital conversion, Fast Fourier Transform (FFT) processing, Inverse Discrete Fourier Transform (IDFT) processing (when needed), filter processing, demapping, demodulation, decoding (that may include error correction decoding), MAC layer processing, RLC layer processing and PDCP layer processing to the obtained baseband signal, and obtain user data.

The transmitting/receiving section 120 (measurement section 123) may perform measurement related to the received signal. For example, the measurement section 123 may perform Radio Resource Management (RRM) measurement or Channel State Information (CSI) measurement based on the received signal. The measurement section 123 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 123 may output a measurement result to the control section 110.

The transmission line interface 140 may transmit and receive (backhaul signaling) signals to and from apparatuses and the other base stations 10 included in the core network 30, and obtain and convey user data (user plane data) and control plane data for the user terminal 20.

In addition, the transmitting section and the receiving section of the base station 10 according to the present disclosure may be composed of at least one of the transmitting/receiving section 120 and the transmission/reception antenna 130.

Furthermore, the transmitting/receiving section 120 transmits one or a plurality of synchronization signal blocks at a candidate position associated with each synchronization signal block in a given slot.

Furthermore, the control section 110 may perform control to transmit the synchronization signal block at at least a specific candidate position irrespectively of the number of synchronization signal blocks to be transmitted in the given slot. The specific candidate position in a slot may be a candidate position that is arranged the earliest in a time direction.

Furthermore, when the number of synchronization signal blocks to be transmitted in the given slot is one, the control section 110 may allow allocation of resources of downlink shared channels associated with the synchronization signal blocks to candidate positions associated with other synchronization signal blocks.

(User Terminal)

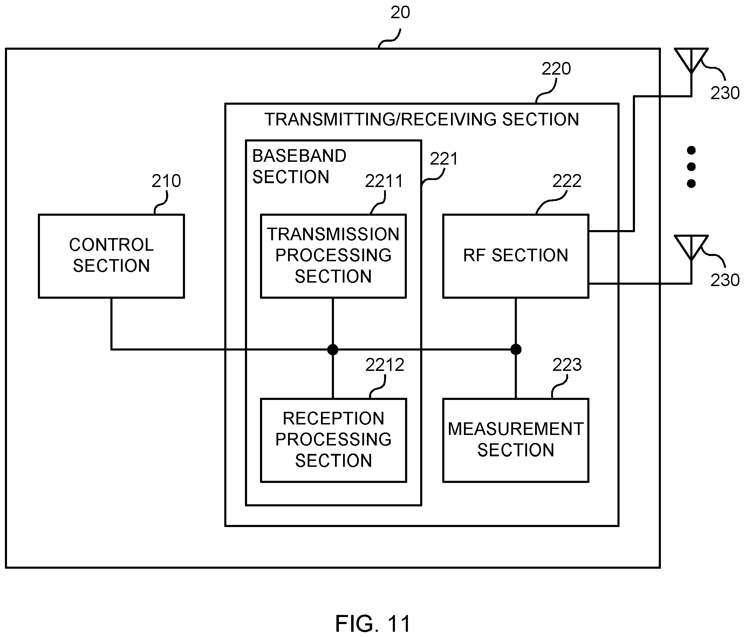

Fig. 11 is a diagram illustrating one example of a configuration of the user terminal according to the one embodiment. The user terminal 20 includes a control section 210, a transmitting/receiving section 220 and transmission/reception antennas 230. In this regard, the user terminal 20 may include one or more of each of the control sections 210, the transmitting/receiving sections 220 and the transmission/reception antennas 230.

In addition, this example mainly illustrates function blocks of characteristic portions according to the present embodiment, and may assume that the user terminal 20 includes other function blocks, too, that are necessary for radio communication. Part of processing of each section described below may be omitted.

The control section 210 controls the entire user terminal 20. The control section 210 can be composed of a controller or a control circuit described based on the common knowledge in the technical field according to the present disclosure.

The control section 210 may control signal generation and mapping. The control section 210 may control transmission/reception and measurement that use the transmitting/receiving section 220 and the transmission/reception antennas 230. The control section 210 may generate data, control information or a sequence to be transmitted as a signal, and forward the signal to the transmitting/receiving section 220.

The transmitting/receiving section 220 may include a baseband section 221, an RF section 222 and a measurement section 223. The baseband section 221 may include a transmission processing section 2211 and a reception processing section 2212. The transmitting/receiving section 220 can be composed of a transmitter/receiver, an RF circuit, a baseband circuit, a filter, a phase shifter, a measurement circuit and a transmission/reception circuit described based on the common knowledge in the technical field according to the present disclosure.

The transmitting/receiving section 220 may be composed as an integrated transmitting/receiving section, or may be composed of a transmitting section and a receiving section. The transmitting section may be composed of the transmission processing section 2211 and the RF section 222. The receiving section may be composed of the reception processing section 2212, the RF section 222 and the measurement section 223.

The transmission/reception antenna 230 can be composed of an antenna such as an array antenna described based on the common knowledge in the technical field according to the present disclosure.

The transmitting/receiving section 220 may receive the above-described downlink channel, synchronization signal and downlink reference signal. The transmitting/receiving section 220 may transmit the above-described uplink channel and uplink reference signal.

The transmitting/receiving section 220 may form at least one of a transmission beam and a reception beam by using digital beam forming (e.g., precoding) or analog beam forming (e.g., phase rotation).

The transmitting/receiving section 220 (transmission processing section 2211) may perform PDCP layer processing, RLC layer processing (e.g., RLC retransmission control) and MAC layer processing (e.g., HARQ retransmission control) on, for example, the data and the control information obtained from the control section 210, and generate a bit sequence to transmit.

The transmitting/receiving section 220 (transmission processing section 2211) may perform transmission processing such as channel coding (that may include error correction coding), modulation, mapping, filter processing, DFT processing (when needed), IFFT processing, precoding and digital-analog conversion on the bit sequence to transmit, and output a baseband signal.

In this regard, whether or not to apply the DFT processing may be based on a configuration of transform precoding. When transform precoding is enabled for a certain channel (e.g., PUSCH), the transmitting/receiving section 220 (transmission processing section 2211) may perform the DFT processing as the above transmission processing to transmit the certain channel by using a DFT-s-OFDM waveform. When precoding is not enabled, the transmitting/receiving section 220 (transmission processing section 2211) may not perform the DFT processing as the above transmission processing.

The transmitting/receiving section 220 (RF section 222) may modulate the baseband signal into a radio frequency range, perform filter processing and amplification on the signal, and transmit the signal of the radio frequency range via the transmission/reception antennas 230.

On the other hand, the transmitting/receiving section 220 (RF section 222) may perform amplification and filter processing on the signal of the radio frequency range received by the transmission/reception antennas 230, and demodulate the signal into a baseband signal.

The transmitting/receiving section 220 (reception processing section 2212) may apply reception processing such as analog-digital conversion, FFT processing, IDFT processing (when needed), filter processing, demapping, demodulation, decoding (that may include error correction decoding), MAC layer processing, RLC layer processing and PDCP layer processing to the obtained baseband signal, and obtain user data.

The transmitting/receiving section 220 (measurement section 223) may perform measurement related to the received signal. For example, the measurement section 223 may perform, for example, RRM measurement or CSI measurement based on the received signal. The measurement section 223 may measure, for example, received power (e.g., RSRP), received quality (e.g., RSRQ, an SINR or an SNR), a signal strength (e.g., RSSI) or channel information (e.g., CSI). The measurement section 223 may output a measurement result to the control section 210.

In addition, the transmitting section and the receiving section of the user terminal 20 according to the present disclosure may be composed of at least one of the transmitting/receiving section 220, the transmission/reception antenna 230 and the transmission line interface 240.

Furthermore, the transmitting/receiving section 220 receives one or a plurality of synchronization signal blocks by using one or more candidate positions configured to the given slot. The transmitting/receiving section 220 may receive the synchronization signal block at at least the specific candidate position irrespectively of the number of synchronization signal blocks to be transmitted in the given slot.

Furthermore, the control section 210 may perform control to receive the synchronization signal block at at least the specific candidate position irrespectively of the number of synchronization signal blocks to be transmitted in the given slot. The specific candidate position may be a candidate position that is arranged the earliest in the time direction.

When the number of synchronization signal blocks to be transmitted in the given slot is one, the resource of the downlink shared channel associated with the synchronization signal block may be allocated to the candidate position associated with another synchronization signal block.

Furthermore, the control section 210 may determine whether or not the another synchronization signal block is transmitted based on allocation of the resource of the downlink shared channel associated with the received synchronization signal block. When, for example, the resource of the downlink shared channel associated with the received synchronization signal block is allocated to the candidate position associated with the another synchronization signal block, the control section 210 may determine that the another synchronization signal block is not transmitted.

(Hardware Configuration)

In addition, the block diagrams used to describe the above embodiment illustrate blocks in function units. These function blocks (components) are realized by an arbitrary combination of at least ones of hardware components and software components. Furthermore, a method for realizing each function block is not limited in particular. That is, each function block may be realized by using one physically or logically coupled apparatus or may be realized by connecting two or more physically or logically separate apparatuses directly or indirectly (by using, for example, wired connection or radio connection) and using a plurality of these apparatuses. Each function block may be realized by combining software with the above one apparatus or a plurality of above apparatuses.

In this regard, the functions include deciding, determining, judging, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning, yet are not limited to these. For example, a function block (component) that causes transmission to function may be referred to as, for example, a transmitting unit or a transmitter. As described above, the method for realizing each function block is not limited in particular.

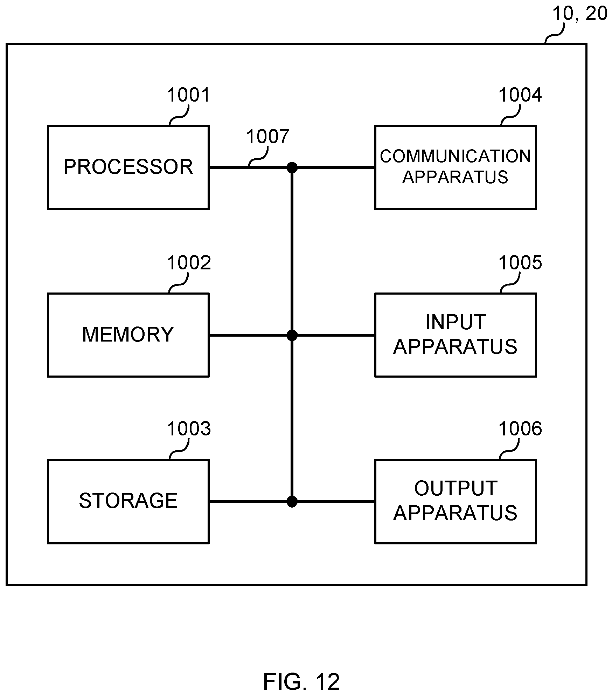

For example, the base station and the user terminal according to the one embodiment of the present disclosure may function as computers that perform processing of the radio communication method according to the present disclosure. Fig. 12 is a diagram illustrating one example of the hardware configurations of the base station and the user terminal according to the one embodiment. The above-described base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, words such as an apparatus, a circuit, a device, a section and a unit in the present disclosure can be interchangeably read. The hardware configurations of the base station 10 and the user terminal 20 may be configured to include one or a plurality of apparatuses illustrated in Fig. 12 or may be configured without including part of the apparatuses.

For example, Fig. 12 illustrates the only one processor 1001. However, there may be a plurality of processors. Furthermore, processing may be executed by 1 processor or processing may be executed by 2 or more processors simultaneously or successively or by using another method. In addition, the processor 1001 may be implemented by one or more chips.

Each function of the base station 10 and the user terminal 20 is realized by, for example, causing hardware such as the processor 1001 and the memory 1002 to read given software (program), and thereby causing the processor 1001 to perform an operation, and control communication via the communication apparatus 1004 and control at least one of reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, at least part of the above-described control section 110 (210) and transmitting/receiving section 120 (220) may be realized by the processor 1001.

Furthermore, the processor 1001 reads programs (program codes), software modules or data from at least one of the storage 1003 and the communication apparatus 1004 out to the memory 1002, and executes various types of processing according to these programs, software modules or data. As the programs, programs that cause the computer to execute at least part of the operations described in the above-described embodiment are used. For example, the control section 110 (210) may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as, for example, a register, a cache or a main memory (main storage apparatus). The memory 1002 can store programs (program codes) and software modules that can be executed to perform the radio communication method according to the one embodiment of the present disclosure.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via at least one of a wired network and a radio network, and is also referred to as, for example, a network device, a network controller, a network card and a communication module. The communication apparatus 1004 may be configured to include a high frequency switch, a duplexer, a filter and a frequency synthesizer to realize at least one of, for example, Frequency Division Duplex (FDD) and Time Division Duplex (TDD). For example, the above-described transmitting/receiving section 120 (220) and transmission/reception antennas 130 (230) may be realized by the communication apparatus 1004. The transmitting/receiving section 120 (220) may be physically or logically separately implemented as a transmitting section 120a (220a) and a receiving section 120b (220b).

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or entirety of each function block. For example, the processor 1001 may be implemented by using at least one of these hardware components.

(Modified Example)

In addition, each term that has been described in the present disclosure and each term that is necessary to understand the present disclosure may be replaced with terms having identical or similar meanings. For example, a channel, a symbol and a signal (a signal or a signaling) may be interchangeably read. Furthermore, a signal may be a message. A reference signal can be also abbreviated as an RS, or may be referred to as a pilot or a pilot signal depending on standards to be applied. Furthermore, a Component Carrier (CC) may be referred to as, for example, a cell, a frequency carrier and a carrier frequency.

A radio frame may include one or a plurality of durations (frames) in a time domain. Each of one or a plurality of durations (frames) that makes up a radio frame may be referred to as a subframe. Furthermore, the subframe may include one or a plurality of slots in the time domain. The subframe may be a fixed time duration (e.g., 1 ms) that does not depend on a numerology.

In this regard, the numerology may be a communication parameter to be applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, specific filtering processing performed by a transceiver in a frequency domain, and specific windowing processing performed by the transceiver in a time domain.

The slot may include one or a plurality of symbols (Orthogonal Frequency Division Multiplexing (OFDM) symbols or Single Carrier Frequency Division Multiple Access (SC-FDMA) symbols) in the time domain. Furthermore, the slot may be a time unit based on the numerology.

The slot may include a plurality of mini slots. Each mini slot may include one or a plurality of symbols in the time domain. Furthermore, the mini slot may be referred to as a subslot. The mini slot may include a smaller number of symbols than that of the slot. The PDSCH (or the PUSCH) to be transmitted in larger time units than that of the mini slot may be referred to as a PDSCH (PUSCH) mapping type A. The PDSCH (or the PUSCH) to be transmitted by using the mini slot may be referred to as a PDSCH (PUSCH) mapping type B.

The radio frame, the subframe, the slot, the mini slot and the symbol each indicate a time unit for conveying signals. The other corresponding names may be used for the radio frame, the subframe, the slot, the mini slot and the symbol. In addition, time units such as a frame, a subframe, a slot, a mini slot and a symbol in the present disclosure may be interchangeably read.

For example, 1 subframe may be referred to as a TTI, a plurality of contiguous subframes may be referred to as TTIs, or 1 slot or 1 mini slot may be referred to as a TTI. That is, at least one of the subframe and the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as, for example, a slot or a mini slot instead of a subframe.

In this regard, the TTI refers to, for example, a minimum time unit of scheduling of radio communication. For example, in the LTE system, the base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block or codeword, or may be a processing unit of scheduling or link adaptation. In addition, when the TTI is given, a time period (e.g., the number of symbols) in which a transport block, a code block or a codeword is actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that make up a minimum time unit of the scheduling may be controlled.

The TTI having the time duration of 1 ms may be referred to as, for example, a general TTI (TTIs according to 3GPP Rel. 8 to 12), a normal TTI, a long TTI, a general subframe, a normal subframe, a long subframe or a slot. A TTI shorter than the general TTI may be referred to as, for example, a reduced TTI, a short TTI, a partial or fractional TTI, a reduced subframe, a short subframe, a mini slot, a subslot or a slot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. The numbers of subcarriers included in RBs may be the same irrespectively of a numerology, and may be, for example, 12. The numbers of subcarriers included in the RBs may be determined based on the numerology.

Furthermore, the RB may include one or a plurality of symbols in the time domain or may have the length of 1 slot, 1 mini slot, 1 subframe or 1 TTI. 1 TTI or 1 subframe may each include one or a plurality of resource blocks.

In this regard, one or a plurality of RBs may be referred to as, for example, a Physical Resource Block (Physical RB (PRB)), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

A Bandwidth Part (BWP) (that may be referred to as, for example, a partial bandwidth) may mean a subset of contiguous common Resource Blocks (common RBs) for a certain numerology in a certain carrier. In this regard, the common RB may be specified by an RB index based on a common reference point of the certain carrier. A PRB may be defined based on a certain BWP, and may be numbered in the certain BWP.

The BWP may include a UL BWP (a BWP for UL) and a DL BWP (a BWP for DL). One or a plurality of BWPs in 1 carrier may be configured to the UE.

At least one of the configured BWPs may be active, and the UE may not assume to transmit and receive given signals/channels outside the active BWP. In addition, a "cell" and a "carrier" in the present disclosure may be read as a "BWP".

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and the parameters described in the present disclosure may be expressed by using absolute values, may be expressed by using relative values with respect to given values or may be expressed by using other corresponding information. For example, a radio resource may be instructed by a given index.

Names used for parameters in the present disclosure are in no respect restrictive names. Furthermore, numerical expressions that use these parameters may be different from those explicitly disclosed in the present disclosure. Various channels (the PUCCH and the PDCCH) and information elements can be identified based on various suitable names. Therefore, various names assigned to these various channels and information elements are in no respect restrictive names.

The information and the signals described in the present disclosure may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or arbitrary combinations of these.

Furthermore, the information and the signals can be output at least one of from a higher layer to a lower layer and from the lower layer to the higher layer. The information and the signals may be input and output via a plurality of network nodes.

The input and output information and signals may be stored in a specific location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspects/embodiment described in the present disclosure and may be performed by using other methods. For example, the information may be notified in the present disclosure by a physical layer signaling (e.g., Downlink Control Information (DCI) and Uplink Control Information (UCI)), a higher layer signaling (e.g., a Radio Resource Control (RRC) signaling, broadcast information (such as a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be given implicitly (by, for example, not giving notification of the given information or by giving notification of another information).

Judgement may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using at least ones of wired techniques (e.g., coaxial cables, optical fiber cables, twisted pairs and Digital Subscriber Lines (DSLs)) and radio techniques (e.g., infrared rays and microwaves), at least ones of these wired techniques and radio techniques are included in a definition of the transmission media.

The terms "system" and "network" used in the present disclosure can be interchangeably used. The "network" may mean an apparatus (e.g., base station) included in the network.

In the present disclosure, terms such as "precoding", a "precoder", a "weight (precoding weight)", "Quasi-Co-Location (QCL)", a "Transmission Configuration Indication state (TCI state)", a "spatial relation", a "spatial domain filter", "transmission power", "phase rotation", an "antenna port", an "antenna port group", a "layer", "the number of layers", a "rank", a "resource", a "resource set", a "resource group", a "beam", a "beam width", a "beam angle", an "antenna", an "antenna element" and a "panel" can be interchangeably used.

In the present disclosure, terms such as a "Base Station (BS)", a "radio base station", a "fixed station", a "NodeB", an "eNodeB (eNB)", a "gNodeB (gNB)", an "access point", a "Transmission Point (TP)", a "Reception Point (RP)", a "Transmission/Reception Point (TRP)", a "panel", a "cell", a "sector", a "cell group", a "carrier" and a "component carrier" can be interchangeably used. The base station is also referred to as terms such as a macro cell, a small cell, a femtocell or a picocell.

The base station can accommodate one or a plurality of (e.g., three) cells. When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of at least one of the base station and the base station subsystem that provide a communication service in this coverage.

In the present disclosure, the terms such as "Mobile Station (MS)", "user terminal", "user apparatus (UE: User Equipment)" and "terminal" can be interchangeably used.

The mobile station is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

At least one of the base station and the mobile station may be referred to as, for example, a transmission apparatus, a reception apparatus or a radio communication apparatus. In addition, at least one of the base station and the mobile station may be, for example, a device mounted on a moving object or the moving object itself. The moving object may be a vehicle (e.g., a car or an airplane), may be a moving object (e.g., a drone or a self-driving car) that moves unmanned or may be a robot (a manned type or an unmanned type). In addition, at least one of the base station and the mobile station includes an apparatus, too, that does not necessarily move during a communication operation. For example, at least one of the base station and the mobile station may be an Internet of Things (IoT) device such as a sensor.

Furthermore, the base station in the present disclosure may be read as the user terminal. For example, each aspect/embodiment of the present disclosure may be applied to a configuration where communication between the base station and the user terminal is replaced with communication between a plurality of user terminals (that may be referred to as, for example, Device-to-Device (D2D) or Vehicle-to-Everything (V2X)). In this case, the user terminal 20 may be configured to include the functions of the above-described base station 10. Furthermore, words such as "uplink" and "downlink" may be read as a word (e.g., a "side") that matches terminal-to-terminal communication. For example, the uplink channel and the downlink channel may be read as side channels.

Similarly, the user terminal in the present disclosure may be read as the base station. In this case, the base station 10 may be configured to include the functions of the above-described user terminal 20.

In the present disclosure, operations performed by the base station are performed by an upper node of this base station depending on cases. Obviously, in a network including one or a plurality of network nodes including the base stations, various operations performed to communicate with a terminal can be performed by base stations, one or more network nodes (that are regarded as, for example, Mobility Management Entities (MMEs) or Serving-Gateways (S-GWs), yet are not limited to these) other than the base stations or a combination of these.

Each aspect/embodiment described in the present disclosure may be used alone, may be used in combination or may be switched and used when carried out. Furthermore, orders of the processing procedures, the sequences and the flowchart according to each aspect/embodiment described in the present disclosure may be rearranged unless contradictions arise. For example, the method described in the present disclosure presents various step elements by using an exemplary order and is not limited to the presented specific order.

Each aspect/embodiment described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New-Radio Access Technology (RAT), New Radio (NR), New radio access (NX), Future generation radio access (FX), the Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods, or next-generation systems that are enhanced based on these systems. Furthermore, a plurality of systems may be combined (for example, LTE or LTE-A and 5G may be combined) and applied.

The phrase "based on" used in the present disclosure does not mean "based only on" unless specified otherwise. In other words, the phrase "based on" means both of "based only on" and "based at least on".

Every reference to elements that use names such as "first" and "second" used in the present disclosure does not generally limit the quantity or the order of these elements. These names can be used in the present disclosure as a convenient method for distinguishing between two or more elements. Hence, the reference to the first and second elements does not mean that only two elements can be employed or the first element should precede the second element in some way.

The term "deciding (determining)" used in the present disclosure includes diverse operations in some cases. For example, "deciding (determining)" may be considered to "decide (determine)" judging, calculating, computing, processing, deriving, investigating, looking up, search and inquiry (e.g., looking up in a table, a database or another data structure), and ascertaining.

Furthermore, "deciding (determining)" may be considered to "decide (determine)" receiving (e.g., receiving information), transmitting (e.g., transmitting information), input, output and accessing (e.g., accessing data in a memory).

Furthermore, "deciding (determining)" may be considered to "decide (determine)" resolving, selecting, choosing, establishing and comparing. That is, "deciding (determining)" may be considered to "decide (determine)" some operation.

Furthermore, "deciding (determining)" may be read as "assuming", "expecting" and "considering".

"Maximum transmit power" disclosed in the present disclosure may mean a maximum value of transmit power, may mean the nominal UE maximum transmit power, or may mean the rated UE maximum transmit power.

The words "connected" and "coupled" used in the present disclosure or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in the present disclosure that, when connected, the two elements are "connected" or "coupled" with each other by using 1 or more electric wires, cables or printed electrical connection, and by using electromagnetic energy having wavelengths in radio frequency domains, microwave domains or (both of visible and invisible) light domains in some non-restrictive and non-comprehensive examples.

A sentence that "A and B are different" in the present disclosure may mean that "A and B are different from each other". In this regard, the sentence may mean that "A and B are each different from C". Words such as "separate" and "coupled" may be also interpreted in a similar way to "different".

When the words "include" and "including" and modifications of these words are used in the present disclosure, these words intend to be comprehensive similar to the word "comprising". Furthermore, the word "or" used in the present disclosure intends to not be an exclusive OR.

When, for example, translation adds articles such as a, an and the in English in the present disclosure, the present disclosure may include that nouns coming after these articles are plural.

The invention according to the present disclosure has been described in detail above. However, it is obvious for a person skilled in the art that the invention according to the present disclosure is not limited to the embodiment described in the present disclosure. The invention according to the present disclosure can be carried out as modified and changed aspects without departing from the gist and the scope of the invention defined based on the recitation of the claims. Accordingly, the description of the present disclosure is intended for exemplary explanation, and does not bring any restrictive meaning to the invention according to the present disclosure.

This application claims priority to Japanese Patent Application No. 2019-050451 filed on February 28, 2019, the entire contents of which are incorporated by reference herein.

**Claims**

1. A terminal comprising:

   a receiving section that receives one or a plurality of synchronization signal blocks by using a candidate position configured to a given slot; and
   a control section that performs control to receive the synchronization signal block at at least a specific candidate position irrespectively of a number of synchronization signal blocks to be transmitted in the given slot.

2. The terminal according to claim 1, wherein the specific candidate position is a candidate position that is arranged the earliest in a time direction.

3. The terminal according to claim 1 or 2, wherein, when the number of synchronization signal blocks to be transmitted in the given slot is one, a resource of a downlink shared channel associated with the synchronization signal block is allocated to a candidate position associated with another synchronization signal block.

4. The terminal according to any one of claims 1 to 3, wherein the control section determines whether or not another synchronization signal block is transmitted based on allocation of a resource of a downlink shared channel associated with the received synchronization signal block.

**5.** The terminal according to claim 4, wherein, when the resource of the downlink shared channel associated with the received synchronization signal block is allocated to a candidate position associated with the another synchronization signal block, the control section determines that the another synchronization signal block is not transmitted.

**6.** A radio communication method comprising:

receiving one or a plurality of synchronization signal blocks by using a candidate position configured to a given slot; and
performing control to receive the synchronization signal block at at least a specific candidate position irrespectively of a number of synchronization signal blocks to be transmitted in the given slot.

## FIG. 1A

MULTIPLEXING PATTERN 1

FREQUENCY

TIME

## FIG. 1B

MULTIPLEXING PATTERN 2

FREQUENCY

TIME

## FIG. 1C

MULTIPLEXING PATTERN 3

FREQUENCY

TIME

SSB

CORESET

PDSCH

EP 3 934 302 A1

| Index | $O$ | Number of search space sets per slot | $M$ | First symbol index |
|-------|-----|--------------------------------------|-----|--------------------|
| 0 | 0 | 1 | 1 | 0 |
| 1 | 0 | 2 | 1/2 | $\{0, \text{if } i \text{ is even}\}, \{ N_{\text{symb}}^{\text{CORESET}}, \text{if } i \text{ is odd}\}$ |
| 2 | 2 | 1 | 1 | 0 |
| 3 | 2 | 2 | 1/2 | $\{0, \text{if } i \text{ is even}\}, \{ N_{\text{symb}}^{\text{CORESET}}, \text{if } i \text{ is odd}\}$ |
| 4 | 5 | 1 | 1 | 0 |
| 5 | 5 | 2 | 1/2 | $\{0, \text{if } i \text{ is even}\}, \{ N_{\text{symb}}^{\text{CORESET}}, \text{if } i \text{ is odd}\}$ |
| 6 | 7 | 1 | 1 | 0 |
| 7 | 7 | 2 | 1/2 | $\{0, \text{if } i \text{ is even}\}, \{ N_{\text{symb}}^{\text{CORESET}}, \text{if } i \text{ is odd}\}$ |
| 8 | 0 | 1 | 2 | 0 |
| 9 | 5 | 1 | 2 | 0 |
| 10 | 0 | 1 | 1 | 1 |
| 11 | 0 | 1 | 1 | 2 |
| 12 | 2 | 1 | 1 | 1 |
| 13 | 2 | 1 | 1 | 2 |
| 14 | 5 | 1 | 1 | 1 |
| 15 | 5 | 1 | 1 | 2 |

FIG. 2

# FIG. 3A

SLOT    #0      #1      #2      #3      #4      #5      #6      #7      #8      #9

SSB

SSB   #0 #1    #2 #3    #4 #5    #6 #7                        FREQUENCY

                                                         TIME

RMSI    #0 →    #1 →    #2 →    #3 →    #4 →    #5 →    #6 →    #7 →

PDCCH    PDSCH

# FIG. 3B

SLOT    #0      #1      #2      #3      #4      #5      #6      #7      #8      #9

SSB    #0 #1    #2 #3    #4 #5    #6 #7                        FREQUENCY

                                                          TIME

RMSI    #0 →    #2 →    #4 →    #6 →

        #1 →    #3 →    #5 →    #7 →

▦ #0   ▨ #1   ▨ #2   ▧ #3   ▨ #4   ▤ #5   ▧ #6   ▨ #7

EP 3 934 302 A1

# FIG. 4A

SLOT    #0     #1     #2     #3     #4     #5     #6     #7     #8     #9

# FIG. 4B

SLOT    #0     #1     #2     #3     #4     #5     #6     #7     #8     #9

EP 3 934 302 A1

FIG. 5A

SLOT                             #0                                    #1

SSB#0            SSB#1                   SSB#2            SSB#3

TIME

SYMBOL   0     2     4     6     8    10   12     0     2     4     6     8    10   12
           1     3     5     7     9    11   13     1     3     5     7     9    11   13

FIG. 5B

SLOT                             #0                                      #1

SSB#0            SSB#1                   SSB#2            SSB#3

TIME

SYMBOL   0     2     4     6     8    10   12     0     2     4     6     8    10   12
           1     3     5     7     9    11   13     1     3     5     7     9    11   13

FIG. 5C

SLOT                             #0                                      #1

SSB#0            SSB#1                   SSB#2            SSB#3

TIME

SYMBOL   0     2     4     6     8    10   12     0     2     4     6     8    10   12
           1     3     5     7     9    11   13     1     3     5     7     9    11   13

## FIG. 6A

SLOT#m

SLOT#m+1

PDCCH  SSB#n  PDSCH  PDCCH  SSB#n+2  PDSCH

FREQUENCY

C  B  C  B  C  B  C  B

TIME

PDCCH  SSB#n+1  PDCCH  SSB#n+3

PDSCH  PDSCH

SYMBOL #   0   2   4   6   8   10   12   0   2   4   6   8   10   12

1   3   5   7   9   11   13   1   3   5   7   9   11   13

## FIG. 6B

SLOT#m

SLOT#m+1

PDSCH  PDSCH

PDCCH  SSB#n  PDCCH  SSB#n+2

FREQUENCY

C  C  B  C  C  B  C  C  B  C  C  B

TIME

PDCCH  SSB#n+1  PDCCH  SSB#n+3

PDSCH  PDSCH

SYMBOL #   0   2   4   6   8   10   12   0   2   4   6   8   10   12

1   3   5   7   9   11   13   1   3   5   7   9   11   13

EP 3 934 302 A1

## FIG. 7A

SLOT#m

SLOT#m+1

PDSCH

PDCCH    SSB#n

PDSCH

PDCCH    SSB#n+2

FREQUENCY

TIME

SSB#n+1

SSB#n+3

SYMBOL #    0    2    4    6    8    10    12    0    2    4    6    8    10    12

1    3    5    7    9    11    13    1    3    5    7    9    11    13

## FIG. 7B

SLOT#m

SLOT#m+1

PDSCH

PDCCH    SSB#n

PDSCH

PDCCH    SSB#n+2

FREQUENCY

TIME

SSB#n+1

SSB#n+3

SYMBOL #    0    2    4    6    8    10    12    0    2    4    6    8    10    12

1    3    5    7    9    11    13    1    3    5    7    9    11    13

27

EP 3 934 302 A1

FIG. 8A

SLOT#m

SLOT#m+1

PDSCH

PDCCH        SSB#n              PDSCH        PDCCH      SSB#n+2

FREQUENCY

| C | C | | B | | | B | | | C | C | B | | | B | |

TIME

SSB#n+1                                      SSB#n+3

SYMBOL #   0    2    4    6    8    10   12    0    2    4    6    8    10   12
                1    3    5    7    9    11   13    1    3    5    7    9    11   13

FIG. 8B

SLOT#m

SLOT#m+1

PDSCH

PDCCH        SSB#n              PDSCH        PDCCH      SSB#n+2

FREQUENCY

| C | C | | B | | C | C | B | | C | C | B | | C | C | B | |

TIME

PDCCH        SSB#n+1                         PDCCH      SSB#n+3
                PDSCH                                        PDSCH

SYMBOL #   0    2    4    6    8    10   12    0    2    4    6    8    10   12
                1    3    5    7    9    11   13    1    3    5    7    9    11   13

28

FIG. 9

FIG. 10

EP 3 934 302 A1

FIG. 11

10, 20

```
                                          1001                               1004
                                ┌──────────────┐                  ┌──────────────────┐
                                │              │      1007        │  COMMUNICATION   │
                                │  PROCESSOR   │───────●──────────│    APPARATUS     │
                                │              │       │          │                  │
                                └──────────────┘       │          └──────────────────┘
                                                       │
                                          1002         │                     1005
                                ┌──────────────┐       │          ┌──────────────────┐
                                │              │       │          │      INPUT       │
                                │    MEMORY    │───────●──────────│    APPARATUS     │
                                │              │       │          │                  │
                                └──────────────┘       │          └──────────────────┘
                                                       │
                                          1003         │                     1006
                                ┌──────────────┐       │          ┌──────────────────┐
                                │              │       │          │     OUTPUT       │
                                │   STORAGE    │───────●──────────│    APPARATUS     │
                                │              │                  │                  │
                                └──────────────┘                  └──────────────────┘
```

FIG. 12

## INTERNATIONAL SEARCH REPORT

| | International application No. |
|---|---|
| | PCT/JP2020/007171 |

A. CLASSIFICATION OF SUBJECT MATTER
Int.Cl. H04W16/14(2009.01)i, H04W72/04(2009.01)i, H04L27/26(2006.01)i
FI: H04W72/04137, H04L27/26420, H04L27/26114, H04W16/14, H04W72/04136,
H04W72/04111

According to International Patent Classification (IPC) or to both national classification and IPC

B. FIELDS SEARCHED

Minimum documentation searched (classification system followed by classification symbols)
Int.Cl. H04W4/00-99/00, H04L27/26

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2018/230879 A1 (LG ELECTRONICS INC.) 20.12.2018<br>(2018-12-20), paragraphs [105]-[107], [123],<br>[133], [141], fig. 9-11 | 1-2, 6<br>3 |
| Y | WO 2018/132456 A1 (QUALCOMM INCORPORATED)<br>19.07.2018 (2018-07-19), paragraphs [0026],<br>[0027], [0047]-[0058] | 3 |
| A | NTT DOCOMO, INC., Initial access signals and<br>channels for NR-U, 3GPP TSG RAN WG1 #96 R1-<br>1902786, 15 February 2019, pp. 5, 6 | 1-6 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08.04.2020 | 28.04.2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

INTERNATIONAL SEARCH REPORT

Information on patent family members

International application No.

PCT/JP2020/007171

| | | | |
|---|---|---|---|
| WO 2018/230879 A1 | 20.12.2018 | US 2019/0215790 A1 paragraphs [0101]-[0103], [0114], [0119], [0123], fig. 9-11 | |
| WO 2018/132456 A1 | 19.07.2018 | US 2018/0199363 A1 paragraphs [0026], [0027], [0047]-[0058] | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019050451 A

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010